# EUROPEAN PATENT APPLICATION

(11) **EP 2 538 675 A1**
(43) Date of publication of application: **26.12.2012**
(21) Application number: 12183998.9
(22) Date of filing: 09.12.2005
(51) Int. Cl.: H04N 7/24, H04N 7/26

(54) **Apparatus for universal coding for multi-view video**

(30) Priority: 10.12.2004 KR 20040104470
(62) Divisional of application: 05822065.8
(71) Applicant: Electronics and Telecommunications Research Institute, Daejon-si 305-350 (KR)
(72) Inventor: Kim, Dae-hee, 305-350 Daejon (KR); Yun, Kug-jin, 305-345 Daejon (KR); Cho, Suk-hee, 305-345 Daejon (KR); Ahn, Chung-hyun, 305-340 Daejon (KR); Lee, Soo-in, 302-120 Daejon (KR)
(74) Representative: Betten & Resch

(57) **Abstract**

Provided is a multi-view video coding/decoding apparatus for compressing and coding multi-view video inputted from a plurality of cameras arranged in a predetermined formation, and decoding the compressed and coded multi-view video and method thereof. The coding apparatus includes: a GOP information generating unit for generating spatiotemporal GOP structure information which denotes referencing relation in a time and a space between pictures for predictive coding; and a multi-view coding unit for performing a predictive coding according to the spatiotemporal GOP structure information, and the decoding apparatus includes a decoding unit for receiving and decoding a signal from external device; a video reproducing unit for recovering the multi-view video using spatiotemporal GOP structure information included in the decoded signal from the decoding unit; and a scene synchronizing unit for synchronizing ulti-view pictures which are recovered at the GOP based video reproducing unit and outputting the synchronized multi-view pictures.

## Description

### Technical Field

The present invention relates to a universal coding/decoding apparatus for multi-view video and a method thereof; and more particularly, to a universal multi-view video coding apparatus for coding multi-view video through predicting a multi-view video by compensating different characteristics of a plurality of randomly arranged cameras such as camera parameters and colors of each camera viewpoint and performing a predictive coding on a picture of a viewpoint which is currently coded, and a method thereof, a universal multi-view video decoding apparatus and method thereof.

### Background Art

In order to provide a realistic video service, multi-view video has been generally used in various application fields. However, much wider bandwidth is required to compress and encode the multi-view video by using a conventional coding scheme because the multi-view video data is mass data as much as multiples of the number of viewpoints.

A MPEG-2 video decoder and a H.264 video coder are widely used as the single-view video coder and decoder. The MPEG-2 video decoder is a decoder represented by a digital TV. Also, the H.264 video coder is generally used for high-efficiency compression and a digital multimedia broadcasting (DMB) service. Such a single-view video codger, however, is not suitable to the transmission of multi-view video data since the single-view coder does not effectively use redundancy information between pictures of adjacent viewpoints.

Various conventional coding technologies were introduced to process a plurality of pictures, such as a coding method processing stereoscopic video for two viewpoints and another coding method processing multi-video data for more than three viewpoints based on three-dimensional object, or based on the arrangement of a plurality of cameras with no regard to the three-dimensional object.

A conventional coding technology using MPEG-2 multi-view profile (MVP) and MPEG-4 temporal scalability (TS) is widely used to code stereoscopic video.

Hereinafter, a major background technology H.264 will be described at first and then MPEG-2 multi-view profile (MVP) will be described.

MPEG4-visual and H.263 are standards for video compression technology. After releasing H.263, the Moving Picture Experts Group (MPEG) and Video Coding Experts Group (VCEG) have researched together to define new standards for a next-generation compression technology that provides a high compression rate while satisfying high-quality and low bit rate streaming video at the same time.

After defining H.263 standard, the VCEG for ITU-T began to research for defining a H.263 version 2 standard and an ITU-T H.26L. The H.263 version 2 is defined by adding supplementary functions to the H.263, and the ITU-T H.26L is a new standard for transmitting video at low bit rate. Such an ITU-T H.26L was highly spotlighted by MPEG. Accordingly, the MPEG joins the VCEG of ITU-T to organize a joint video team (JVT) to define the H.26L model as an international standard. As a result, ISO MPEG4 Part 10, that is, the ITU-T H.264, was introduced as the international standard.

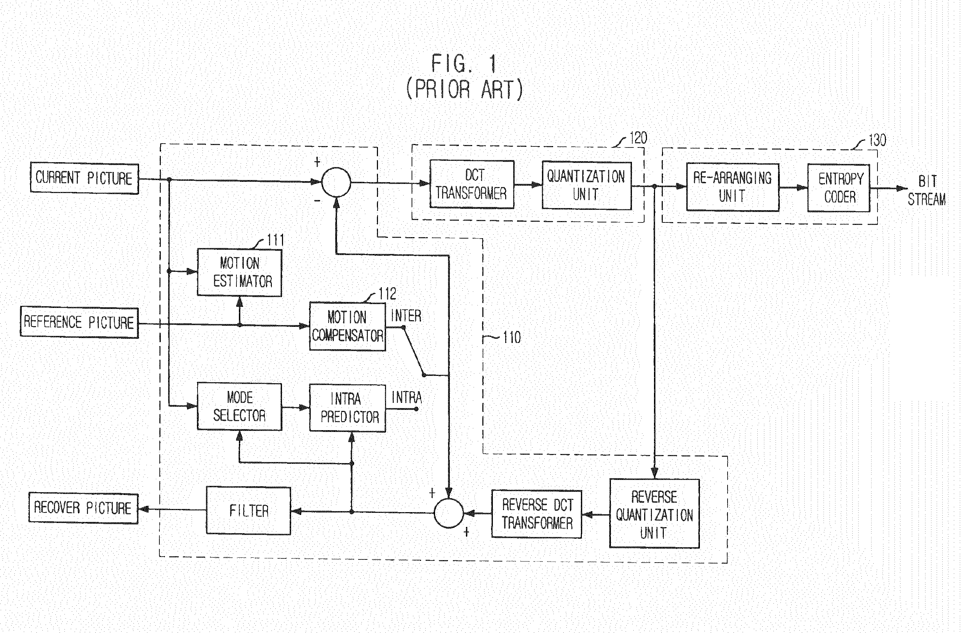

Fig. 1 is a block diagram illustrating a conventional H.264 coder.

The conventional H.264 coder includes a prediction block 110, a transform and quantization block 120 and an entropy coding block 130.

The prediction block 110 performs an inter prediction and an intra prediction. The inter prediction is a block prediction performed on a current picture using a reference picture that is generated through decoding and de-blocking filtering and stored in a buffer. That is, the inter prediction performs the prediction using information between pictures. The prediction block 110 includes a motion estimation block 111 and a motion compensation block 112 for the inter prediction. The intra prediction is a prediction performed using pixel data of blocks adjacent to a target block to be predicted within a picture to be decoded.

The transform and quantization block 120 compresses video data by transforming a prediction sample obtained at the prediction block 110 and quantizing the transformed data. The entropy coding block 130 encodes quantized video data according to a predetermined coding scheme to generate H.264 bit stream.

Hereinafter, the MPEG-2 multi-view profile (MVP) will be described.

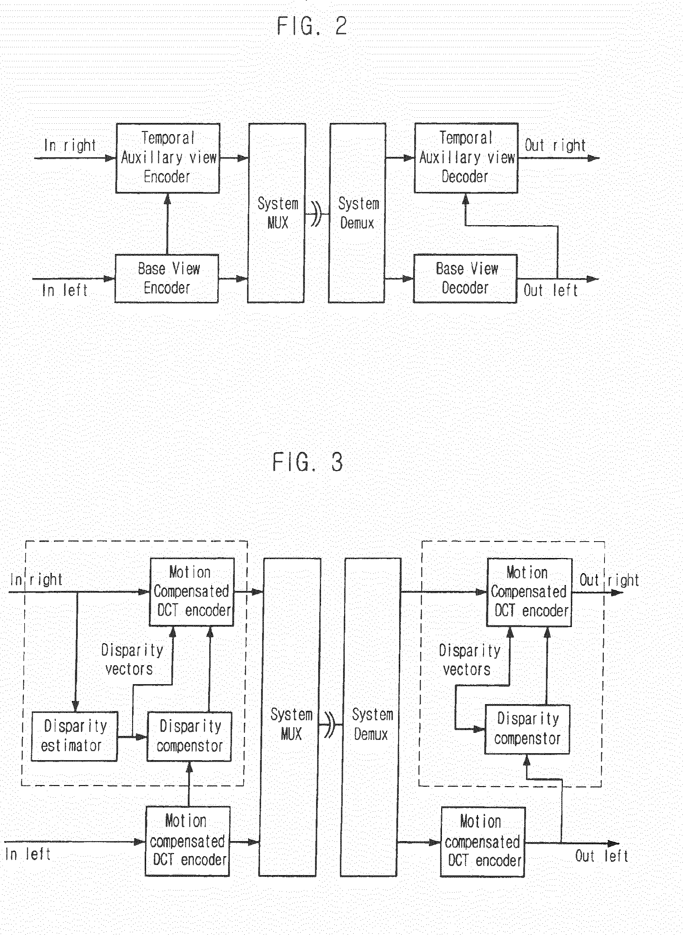

Fig. 2 is a block diagram showing a coder and decoder for MPEG-2 multi-view profile (MVP) embodied by applying a time scalability of video experts group (MPEG)-2.

The scalability in MPEG-2 is for decoding images having different resolutions using single equipment at the same time. A time scalability among the scalabilities is a technology for improving visual quality by increasing a frame rate. A multi-view profile is developed by implementing the time scalability onto a stereo video.

The stereo video based coder and decoder generally have a time scalability structure shown in Fig. 2. In the conventional stereo video coder, left pictures among stereo video are input to a base view encoder and right pictures are input to a temporal auxiliary view encoder as shown in Fig. 2.

The conventional stereo video coder generally has the shown structure for time scalability. That is, it is an interlayer encoder creating pictures between pictures of a base layer. Accordingly, if left pictures are independently encoded and decoded, a normal video may be generated. However, if left and right pictures are encoded and decoded at the same, a three-dimensional video can be generated. Herein, a system MUX and a system DeMUX are required to synchronize or to separate sequences of two pictures for transmitting or storing the video.

Fig. 3 is a block diagram illustrating a stereo video coder/decoder using a MPEG-2 multi-view profile (MVP).

As shown in Fig. 3, a base layer of picture is coded by a motion-compensated DCT coder that encodes data through motion compensation and discrete cosine transform (DCT), and the coded base layer is decoded through the reverse process of coding, that is, the DCT and the motion compensation. A temporal auxiliary view encoder is a temporal interlayer encoder that performs a prediction based on the decoded base layer picture.

That is, the stereo coder/decoder using MPEG-2 MVP may use two disparity estimations, or one disparity estimation and motion compensating prediction. Just as the base layer coder and decoder, the temporal auxiliary view encoder includes a disparity and motion-compensated DCT coder and decoder.

Just as the motion-estimated and compensated coding step requiring the motion estimator and the motion compensator, the disparity-compensated coding step requires a disparity estimator and a disparity compensator. Additionally, the disparity-compensated coding steps includes DCT on differences between the predicted picture and the original picture, quantization of DCT coefficients and variable length coding with the block based motion and disparity estimation and compensation. On the contrary, variable length decoding, reverse-quantization and reverse-DCT are performed in sequence for the disparity-compensated decoding step.

The MPEG-2 coding is very effective compression method because of bidirectional motion prediction for bi-directional predictive picture (B-picture). The MPEG-2 coding is also very effective for time scalability. Therefore, the high effective compression can be obtained using B-picture to encode right pictures.

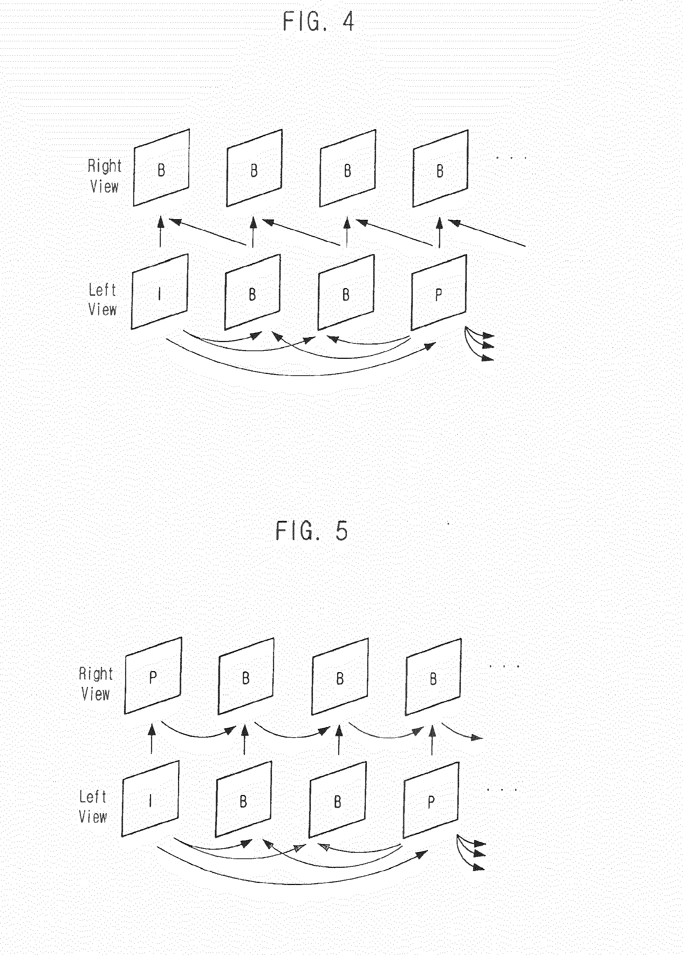

Fig. 4 is a view showing a predictive coding considering only a time difference through two disparity estimations for bidirectional prediction. The left pictures are coded using a non-scalable MPEG-2 encoder, and the right pictures are coded based on the coded left pictures using a temporal auxiliary view encoder located at a MPEG-2 time domain.

That is, the original picture is coded to B-picture using estimation obtained from two different left pictures. Herein, one of the two reference pictures is a left picture when it displayed and the other is a next picture followed by the displayed left picture.

Three estimation modes are generated from the two estimations, such as, a forward estimation mode, a backward estimation mode and an interpolated estimation mode just as the motion estimation/compensation. Herein, the forward estimation mode is a disparity predicted from the left picture at the same time, and the backward estimation mode is a disparity predicted from a next left picture. The prediction of right picture is obtained through a disparity vector of two left pictures. Therefore, it is called as a disparity based predictive coding. That is, the coder estimates two disparity vectors per each frame of right video, and the decoder decodes a right video from the left video using these two disparity vectors.

Fig. 5 is a view showing a predictive coding using a disparity vector and a motion vector for bi-directional prediction in the conventional MPEG-2 MVP. That is, single disparity estimation and single motion estimation are used in Fig. 5 although it uses the B-picture obtained through the bi-directional prediction shown in Fig. 4. That is, the disparity estimation is performed from the left picture of same time stage, and the motion estimation is performed on a right picture of a previous time stage as shown in Fig. 5.

The bi-directional prediction generates three estimation modes such as a forward estimation mode, a backward estimation mode and an interpolated estimation mode. Herein, the forward estimation mode is a motion estimation obtained from a decoded right picture, and the backward mode is a disparity estimation obtained from the decoded left picture.

Therefore, specification of MPEG-2 MVP is designed for real stereo video, but there is no definitions made for a structure of a coder for multi-view video. Therefore, there is great demand for a coder for effectively providing a realistic multi-view video to a plurality of users at the same time.

The MPEG-2 proposes specifications for coding and decoding videos. That is, the picture is classified into Intra coded (I)-picture, Predictive coded (P)-picture and Bi-directionally predictive coded (B)-picture in MPEG-2. The I-picture is obtained by coding a picture through performing the DCT without performing a motion vector estimation/compensation. The P-picture is a picture obtained by performing a motion estimation and compensation based on the I-picture or other P-picture and coding the picture through performing the DCT on differences between estimated and compensated picture and original picture. The B-picture is obtained similar to the P-picture but the motion estimation/compensation is performed on two frames on same time domain.

The picture of MPEG-2 has a structure of B, B, I, B, B, P, .... Pictures from I-picture to following I-picture are called as a group of picture (GOP). The number of pictures in the GOP is defined as N, and the number of pictures between I-picture and P-picture or P-picture and P-picture is defined as M.

Since MPEG-2 is the standard for coding and decoding video in a singe view, there is no specification for a coder for multi-view video although MPEG-2 introduces MVP for extending the single view type video to stereo type video. In order to code multi-view video, it requires to process data representing multi-view information.

Conventional technologies for coding multi-view videos by extending structure of MPEG-2 MVP were introduced in Korean Patent Application No. 10-2002-0021757 and Korean Patent Application No. 10-2003-0002116.

In Korean Patent Application No. 10-2002-0021757, a GGOP is introduced and a CODEC configured based on MPEG-2 is used. In Korean Patent Application No. 10-2003-002116, bit sequence of center view is created. Such a bit sequence of center view is used as a reference when bit sequence of left and right pictures is created.

In Korea Patent Application No. 10-2002-0021757, single motion estimation vector is used when the P-picture is coded due to the comparability to MPEG-2. In case of B-picture, two vectors are used. Therefore, a disparity vector of adjacent viewpoints at current time and a motion vector of previous frame are used.

In Korea Patent Application No. 10-2003-002116, single motion vector and single disparity vector are used to reference center view picture when P-pictures of left and right views are coded.

These conventional technologies cannot use more than two motion vectors or disparity vectors and cannot perform bi-directional estimation coding on a time domain when B-picture of MPEG-2 is coded because of comparability to MPEG-2 or MPEG-4. Furthermore, a distanced between viewpoints and a size of base line increase the number of views for I-pictures to be decoded. The method is not suitable for the estimation of a disparity vector. That is, adjacent views must be transformed to current viewpoint. Also, arrangements of cameras are limited to a matrix type arrangement such as parallel arrangement or two-dimensional parallel arrangement.

### Disclosure

### Technical Problem

It is, therefore, an object of the present invention to provide a multi-view video coding and decoding apparatus for improving a compression efficiency by effectively eliminating redundancy information between adjacent cameras through using camera information such as an arrangement of cameras or multi-view videos, camera parameter and color compensation and using pictures of adjacent views currently referred to by a currently coded picture as the reference picture of predictive coding.

It is another object of the present invention to provide an apparatus and method for coding and decoding multi-view video by transforming information about two dimensional spatiotemporal GOP structure and about adjacent views to a view that currently coded and using related picture as reference pictures for effective predictive coding.

It is still another object of the present invention to provide an apparatus and method for coding and decoding multi-view video that extends characteristics of a H.264 based coder for a single view picture which is the using of a plurality of pictures in previous time stage as a reference frame to a multiple view.

### Technical Solution

In accordance with one aspect of the present invention, there is provided a multi-view video coding apparatus for compressing and coding multi-view video inputted from a plurality of cameras arranged in a predetermined formation, including: a GOP information generating unit for generating spatiotemporal group of picture (GOP) structure information which denotes referencing relation in a time and a space between pictures for predictive coding; and a multi-view coding unit for performing a predictive coding according to the spatiotemporal GOP structure information

In accordance with another aspect of the present invention, there is provided a multi-view video cording method for compressing and coding multi-view video inputted from a plurality of cameras that are arranged in a predetermined format, including the steps of: a) generating spatiotemporal GOP structure information which denotes referencing relation in a time and a space between pictures for predictive coding; and b) performing a predictive coding according to the spatiotemporal GOP structure information.

In accordance with still another aspect of the present invention, there is provided a multi-view decoding apparatus for receiving coded signal of multi-view video inputted from a plurality of cameras that are arranged in a predetermined formation, the multi-view decoding apparatus including: a decoding unit for receiving a signal from external device and decoding the received signal; a spatiotemporal GOP based video reproducing unit for recovering the multi-view video using spatiotemporal GOP configuration information included in the decoded signal from the decoding unit; and a scene synchronizing unit for synchronizing multi-view pictures which are recovered at the GOP based video reproducing unit and outputting the synchronized multi-view pictures, herein the spatiotemporal GOP structure information expresses reference relation between pictures for predictive coding in time domain and in spatial domain.

In accordance with further still another aspect of the present invention, there is provided a multi-view decoding method for receiving coded signal of multi-view video inputted from a plurality of cameras that are arranged in a predetermined formation, the multi-view decoding method including the steps of: receiving a signal from external device and decoding the received signal; recovering the multi-view video using spatiotemporal GOP configuration information included in the decoded signal from the decoding unit; and synchronizing multi-view pictures which are recovered at the GOP based video reproducing unit and outputting the synchronized multi-view pictures, wherein the spatiotemporal GOP structure information expresses reference relation between pictures for predictive coding in time domain and in spatial domain.

### Advantageous Effects

The apparatus for coding and decoding multi-view video according to the present invention obtains multi-view video data having various arrangements of cameras, compresses the obtained multi-view video data, transmits the compressed multi-view video data, decodes the compressed multi-view video data and displays the decoded video data without having a limitation of camera arrangement.

The apparatus for coding and decoding multi-view video according to the present invention can provide stereo display service, omni video service, panoramic video service, and free viewpoint TV service through a single coding scheme by performing a predictive coding on randomly arranged multi-view information, and improves the compression efficiency through using information of adjacent views when the multi-view picture is coded.

Also, the apparatus and method for coding and decoding multi-view video according to the present invention improves a compression efficiency using redundancy information between a current viewpoint and an adjacent camera viewpoint.

### Description of Drawings

The above and other objects and features of the present invention will become apparent from the following description of the preferred embodiments given in conjunction with the accompanying drawings, in which:
Fig. 1 is a block diagram showing a conventional H.264 coder;
Fig. 2 is a block diagram illustrating a conventional MPEG-2 MVP coder and decoder;
Fig. 3 is a block diagram depicting a conventional stereo video coder using MPEG-2 MVP;
Fig. 4 is a view of conventional predictive coding using view different using two disparity estimations for bi-directional prediction in MPEG-2 MVP;
Fig. 5 is a view of conventional predictive coding using disparity vector and motion vector for bi-directional prediction in MPEG-2 MVP;
Fig. 6 is a view showing a structure of picture defined in conventional MPEG-2;
Fig. 7 is a block diagram illustrating a multi-view coding/decoding system according to an embodiment of the present invention;
Fig. 8 is a block diagram showing a spatiotemporal GOP generating unit according to a preferred embodiment of the present invention;
Fig. 9 shows reference connection types expressed relations in a spatiotemporal GOP structure according to the present invention;
Fig. 10 is a view for describing a triangle arrangement referencing structure of spatiotemporal GOP according to the preferred embodiment of the present invention;
Fig. 11 shows a spatiotemporal GOP structure including P-picture at time t1 according to an embodiment of the present invention;
Fig. 12 shows a spatiotemporal GOP structure including a P-picture and a B-picture at time t1 according to an embodiment of the present invention;
Fig. 13 is a block diagram illustrating a multi-view coding unit according to an embodiment of the present invention; and
Fig. 14 is a block diagram illustrating a multi-view reference picture providing unit according to an embodiment of the present invention.

### Best Mode for the Invention

Other objects and aspects of the invention will become apparent from the following description of the embodiments with reference to the accompanying drawings, which is set forth hereinafter.

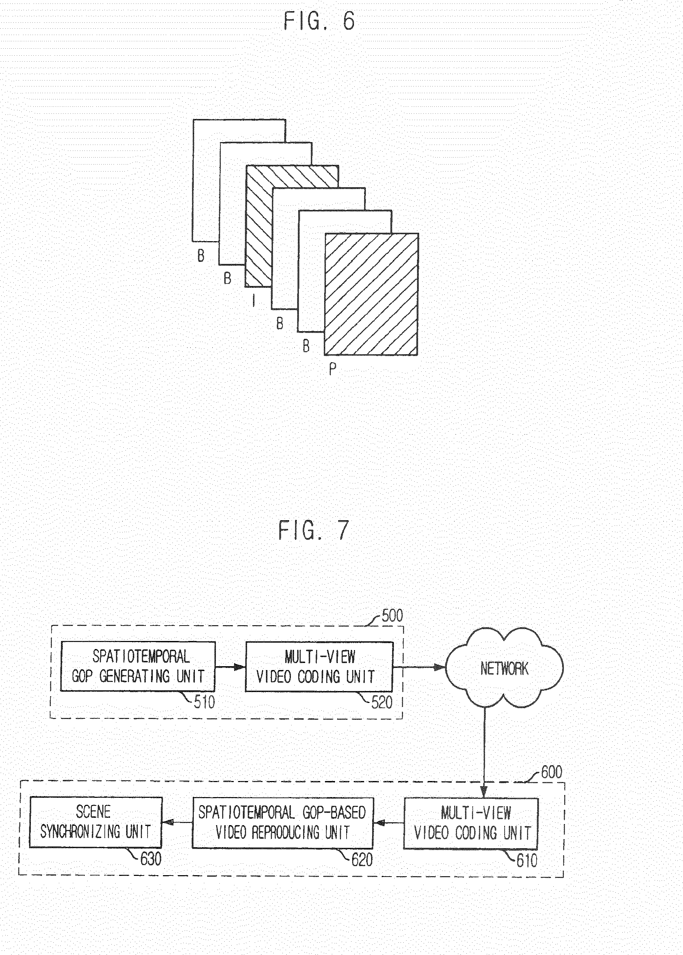

Fig. 7 is a block diagram illustrating a multi-view video coding/decoding system according to an embodiment of the present invention.

As shown in Fig. 7, the multi-view video coding/decoding system includes: a multi-view video coding apparatus 500 for receiving multi-view video data, for example, N view video data from N randomly arranged cameras, compressing and coding the multi-view video data to a bit sequence and transmitting the bit sequence; and a multi-view video decoding apparatus 600 for receiving the bit sequence and decoding and synchronizing the bit sequence to multi-view video.

The multi-view video coding apparatus 500 includes a spatiotemporal GOP generating unit 510 and a multi-view coding unit 520.

The spatiotemporal GOP generating unit 510 receives N of multi-view video and camera information from N cameras and users. The camera information includes information about N views of camera characteristics and information about locations of cameras and camera arrangement. The spatiotemporal GOP generating unit 510 creates spatiotemporal GOP information based on the received information.

The multi-view video coding unit 520 performs predictive coding on multi-view video using the created spatiotemporal GOP information and camera information.

The multi-view video decoding apparatus 600 includes a multi-view video decoding unit 610, a spatiotemporal GOP based video reproducing unit 620 and a scene synchronizing unit 630. As described above, the multi-view video decoding apparatus 600 receives the bit sequence, decodes the received bit sequence through the multi-view video decoding unit 610, recovers all multi-view video using the spatiotemporal GOP information at the spatiotemporal GOP based picture reproducing unit 620 and the recovered pictures are properly synchronized according to the multi-view video application at the scene synchronizing unit 630. Then, these synchronized video is provided to users.

Hereinafter, the multi-view video decoding apparatus will be described in more detail.

The multi-view video decoding unit 610 processes the received bit sequence through entropy-decoding, reverse rearranging, reverse-quantizing and reverse-transforming, and the spatiotemporal GOP based picture reproducing unit 620 re-configures multi-view video from the reverse transformed signal using the spatiotemporal GOP information included in the bit stream. Also, the scene synchronizing unit 630 synchronizes the multi-view pictures recovered at the spatiotemporal GOP based picture reproducing unit 620.

Also, the spatiotemporal GOP based picture reproducing unit 620 performs motion compensation according to the spatiotemporal GOP information if the currently decoded picture has same view compared to the reference picture. If the currently decoded picture is a picture having adjacent view of reference picture, the spatiotemporal GOP based video reproducing unit 620 performs disparity/motion correction.

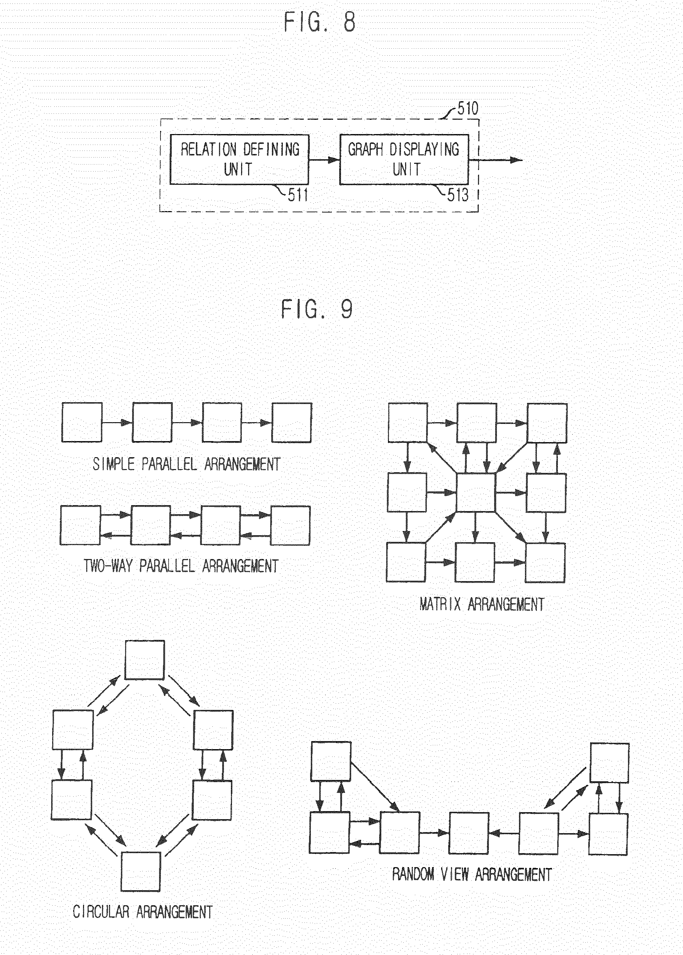

Fig. 8 is a block diagram showing a spatiotemporal GOP generating unit according to a preferred embodiment of the present invention.

Referring to Fig. 8, the spatiotemporal GOP generating unit 510 includes a relation defining unit 511 and a graph displaying unit 513.

The relation defining unit 511 defines a predictive relation of pictures between views based on user information or the camera information. The graph displaying unit 513 generates spatiotemporal GOP information using the defined information, which is graph information expressing the reference relation among multi-view pictures. The generated spatiotemporal GOP information is outputted to the multi-view coding unit 520.

The graph information may be displayed according to various methods defined general data structure.

In order to create spatiotemporal GOP information for supporting a random camera viewpoint, a concept of time GOP must employ a conventional GOP concept of MPEG-2 and a spatial GOP must be configured as a graph built through connecting nodes each denoting locations of cameras.

If viewpoints are inter-referred to one another for predictive coding, two nodes are connected to be inter-referred as like as a double-linked list. If the viewpoint is referred to by one side only, the nodes are connected as a single-linked list.

If cameras are arranged in a form of circle, nodes are formed as a circular queue in data structure. In case of parallel one dimensional structure, nodes are formed as like as single-linked list or double-linked list.

In case of complicated reference relations existed between nodes, a spanning tree is generated using an initial reference viewpoint as a start node and connecting nodes according to a predetermined order with the relation.

Fig. 9 shows reference connection types expressed relations in a spatiotemporal GOP structure according to the present invention.

As shown in Fig. 9, the spatiotemporal GOP according the present invention can express all reference relations among multi-view videos such as simple parallel, bi-directional parallel, matrix arrangement, circular arrangement and random arrangement.

Arrows shown in Fig. 9 denotes a direction of referencing and the direction of referencing may be one-directional and bi-directional.

As described above, the multi-view decoder can support a random access function by creating GOP using the spatial arrangement and visual configuration.

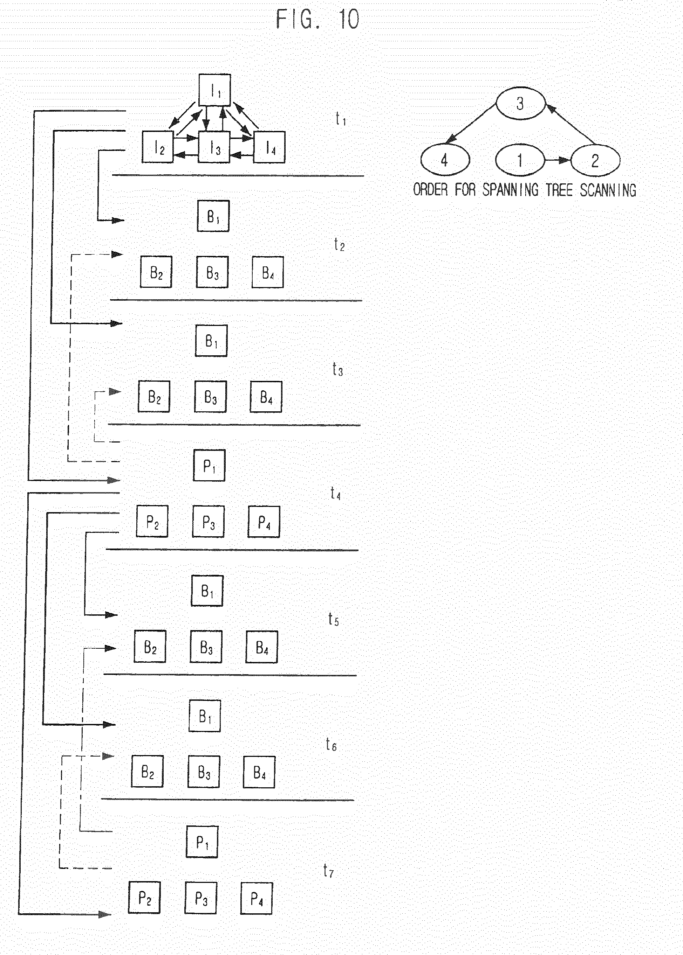

Fig. 10 is a view describing a triangle arrangement referencing structure of spatiotemporal GOP according to the preferred embodiment of the present invention.

Arrows with dotted lines denotes a referencing relation of camera.

As shown in Fig. 10, all cameras have bi-directional referencing relations in the present embodiment. Since a picture is configured of I-pictures at an initial stage, it assumes that pictures of other time are only used as reference pictures without using information about adjacent camera viewpoint at same time as the reference picture.

In the configuration shown in Fig. 9, pictures at time t1 are used as the reference picture when all frames at time t4 are coded to P-pictures.

In order to code P-pictures P1 and P3 at time t4, I-pictures I1, I2, I3 and I4 at time t1 are used as the reference pictures. Also, the I-pictures I1, I2 and I3 at time t1 are referred to when the P-picture P2 at t4 is coded, and the I-pictures I1, I3 and I4 at time t1 are referred when the P-picture P4 of t4 is coded. A coding scheme of time t7 references pictures as like as pictures at time t4 that references the pictures at time t1 but the coding scheme of time t7 references P-pictures instead of I-pictures.

B-pictures B1 and B3 among pictures at times t2 and t3 perform bi-directional predictive coding using I-pictures I1, I2, I3 and I4 at time t1 and P-pictures P1, P2, P3 and P4 of time t4 as the reference pictures. The B-picture B2 performs the bi-directional predictive coding using the I-pictures I1, I2 and I3 of time t1 and the P-pictures P1, P2 and P3 of time t4 as the reference pictures, and the B-picture B4 performs the bi-directional predictive coding using the I-pictures I1, I3 and I4 of time t1 and the P-pictures P1, P3 and P4 of time t4 as the reference pictures.

Order of coding pictures at each node is decided according to a spanning tree structure shown in an upper right of Fig. 9. Relations of referencing pictures of other times are described above.

If it is possible to reference a picture of other viewpoint at same time from the currently coded picture because the picture of other viewpoint is coded in advance according to an order of spanning tree, pictures to be predictive coded at times t2 to t7 can uses pictures previously coded at the same times as the reference pictures additionally.

For example, if the picture P4 at time t4 is coded, the picture P3 at time t4 can be added as the reference picture. If the picture P2 is coded, the pictures P1 and P3 at time t4 can be used as the reference picture according to the viewpoint connection information between cameras.

When the picture P3 at time t4 is coded pictures of the same time cannot be used as the reference picture. Only a picture of previous time can be used as the reference picture.

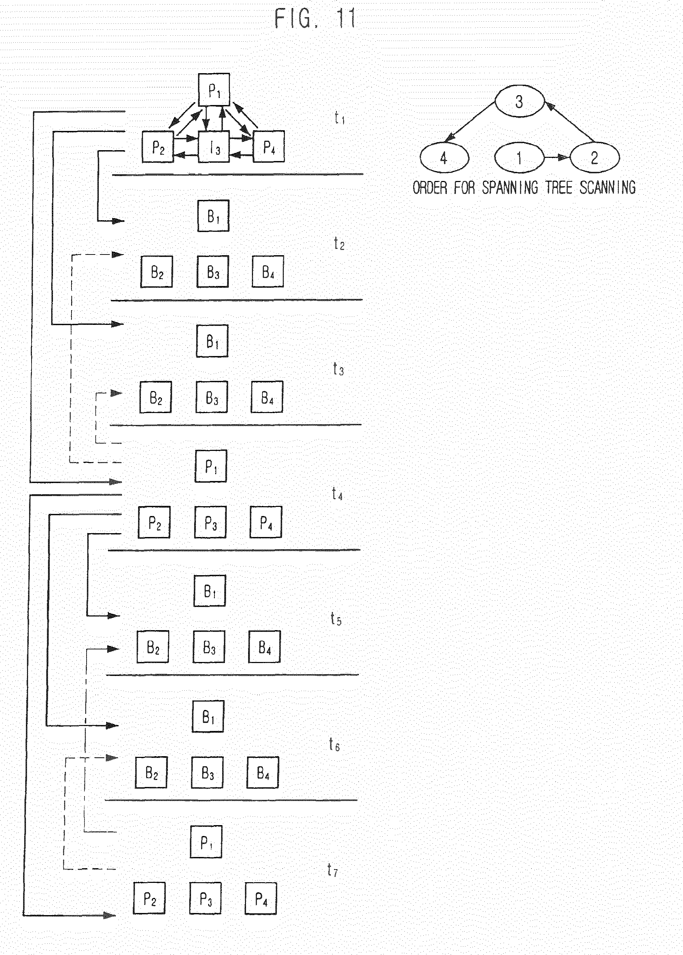

Fig. 11 shows a spatiotemporal GOP structure including P-picture at time t1 according to an embodiment of the present invention.

As shown in Fig. 11, the I-picture 13 is coded at first and then the P-pictures P4, P1 and P2 are coded according to the next spanning tree.

Herein, the P-pictures P4, P1 and P2 are predictive coded using pictures connected by camera viewpoint connectivity information among previously coded pictures.

A method of coding pictures after the time uses the reference picture selecting method of Fig. 10 and the reference picture selecting method of Fig. 11 at the same time.

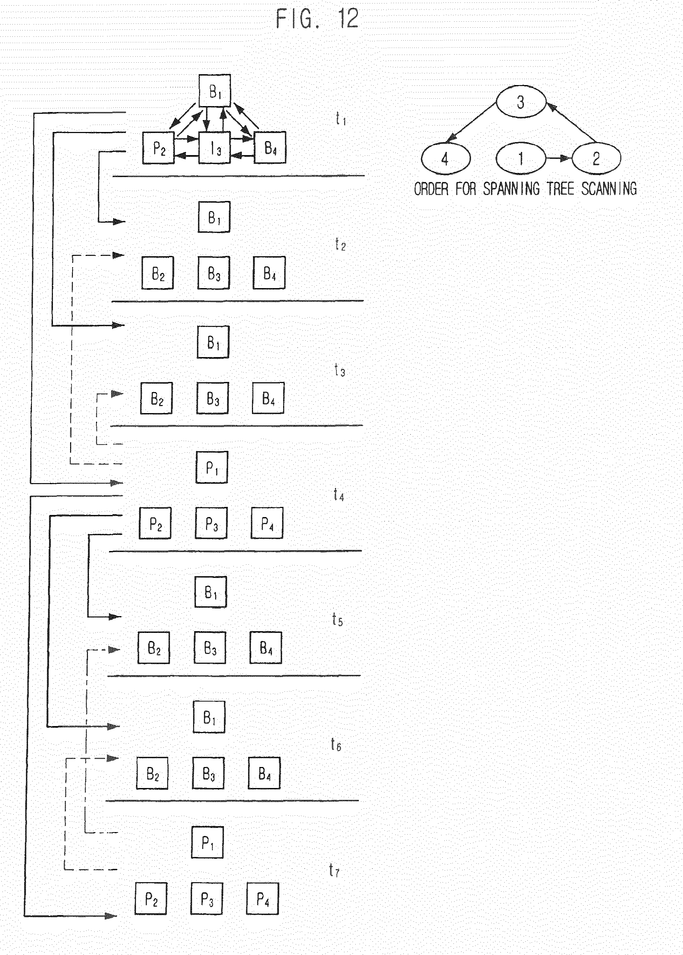

Fig. 12 shows a spatiotemporal GOP structure including a P-picture and a B-picture at time t1 according to an embodiment of the present invention.

The picture I3 is coded at first according to the GOP structure shown in Fig. 12, and then, the picture P2 is coded. Herein, the P-picture P2 uses the I-picture I3 as the reference picture.

The B-picture B4 may use the I-pictures I3 and I2 as the reference pictures, and the I-picture I3 is only added as the reference picture because the connectivity information is only connected to the I-picture I3.

Then, the B-picture B1 is predictive coded using the pictures I3 and P2 as the reference pictures.

Then, the method of coding pictures uses the reference picture selection method of Figs. 10 and 11, and the reference picture selecting method at time t1 in Fig. 12.

As shown in Figs. 10, 11 and 12, viewpoint pictures at times having I-pictures are not coded from pictures at a previous time or at a future time. Also, view pictures at a times having P-pictures is predictive coded from viewpoint pictures at a previous times having I-picture or P-picture. Furthermore, view pictures at times having B-picture is predictive coded from view pictures at times having I-picture or P-picture of past or future times.

Herein, the B-picture among viewpoint pictures at a time having I-picture and P-picture is used for predictive coding pictures at other times.

If it requires using pictures of not only near camera viewpoint but also far camera viewpoint, they can be used as a reference pictures. In this case, the connection relation thereof is defined and they are coded according to the connection relation. If a connectivity information is set between the P-pictures P2 and P4, the pictures are coded and decoded according to the set connectivity information.

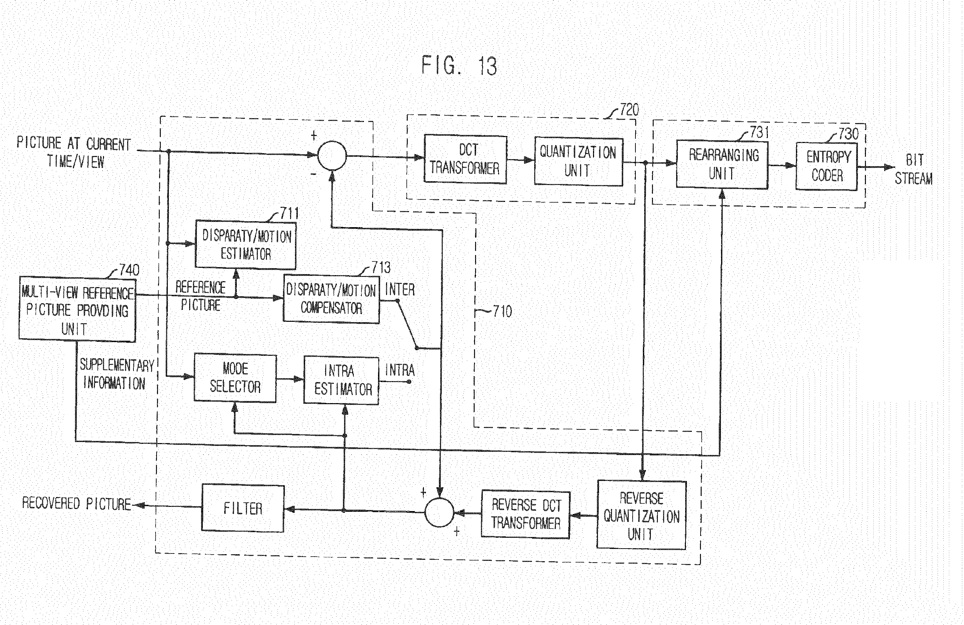

Fig. 13 is a block diagram illustrating a multi-view coding unit according to an embodiment of the present invention.

As shown in Fig. 13, the multi-view coding unit includes a multi-view reference picture providing unit 740, an estimating unit 710, a transform and quantization unit 720 and an entropy coding unit 730.

The estimating unit 710, the transform and quantization unit 720 and the entropy coding unit 730 are identical to those units 110, 120 and 130 in the conventional H.264 coder. However, the disparity/motion estimator 711 and the disparity/motion compensator 713 are operated as a motion estimator and a motion compensator when an input reference picture is a picture of same time. If the reference picture is a picture of other time, the disparity/motion estimator 711 and the disparity/motion compensator 713 are operated as the disparity estimator 711 and the disparity compensator 713.

A multi-view reference picture providing unit 740 receives and stores multi-view picture recovered through the reverse quantization and reverse transformation for predictive coding a picture signal transformed and quantized through the transform and quantization unit 720. Also, the multi-view reference picture providing unit 740 selects a reference picture according to GOP structure information inputted from the spatiotemporal GOP generating unit 510, and provides the selected reference picture to the disparity/motion compensator and the disparity/motion estimator. Accordingly, the predictive coding is allowed to be performed according to the reference relation of multi-view picture expressed in the GOP structure information. The multi-view reference picture providing unit 740 also allows the spatiotemporal GOP structure information to be used in the decoding by providing supplementary information including spatiotemporal GOP structure information to the rearrangement unit 731, entropy-coding the spatiotemporal GOP structure information with currently estimated coded picture information and transmitting the coded information.

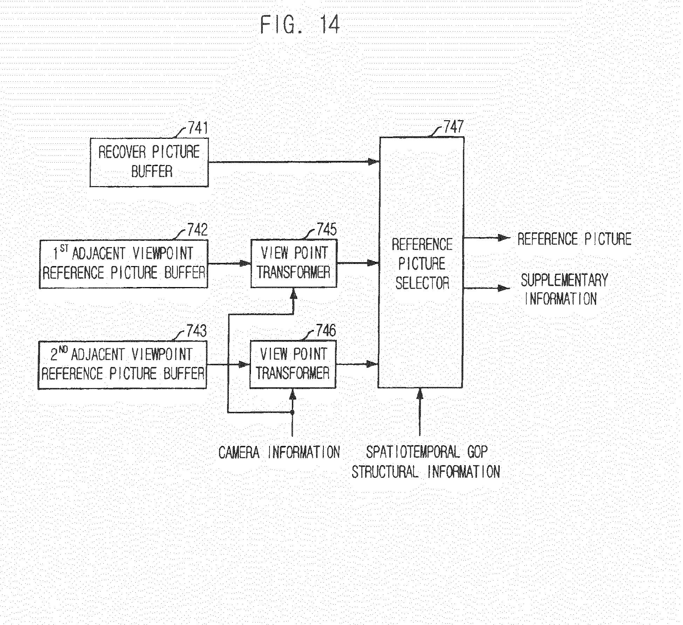

Fig. 14 is a block diagram illustrating a multi-view reference picture providing unit according to an embodiment of the present invention.

Referring to Fig. 14, the multi-view reference picture providing unit 740 according to the present embodiment includes a recovery picture buffer 741, a first adjacent viewpoint reference picture buffer 742, a second adjacent viewpoint reference picture buffer 743, viewpoint transformers 745 and 746 and a reference picture selecting or 747.

The recovery picture buffer 741 receives recovered pictures at a current viewpoint of other time from a filter, temporally stores the received picture and outputs the stored picture to the reference picture selecting unit 747.

The first adjacent reference picture buffer 742 receives recovery picture of adjacent viewpoint at current time which is previously coded from a filter, temporally stores the received picture as a reference picture and outputs the stored picture to the viewpoint transforming unit 745. The second adjacent reference picture buffer 743 receives a recovery picture of adjacent viewpoint at different time from a filter, stores the received picture as the reference picture and outputs the stored picture to the viewpoint transforming unit 746.

The viewpoint transforming units 745 and 746 correct a current viewpoint and color balance using previously inputted camera information in order to use adjacent viewpoint picture inputted from the first adjacent viewpoint reference picture buffer 742 as a reference picture. Also, the viewpoint transforming units 745 and 746 transforms pictures based on a global motion compensation and rectification, and generates a reference picture which can be used as the reference picture of predictive coding. The generated reference picture is outputted to the reference picture selecting unit 747.

The reference picture selector 744 selects one of the received reference pictures to be used for current predictive coding according to the spatiotemporal GOP structure information inputted from the spatiotemporal GOP generating unit 510, and outputs the selected reference picture to the disparity/motion estimator 711 and the disparity/motion compensator 713. Also, the reference picture selecting unit 748 generates supplementary information including the GOP structure information, and outputs the generated supplementary information to the rearranging unit 731.

The above described method according to the present invention can be embodied as a program and stored on a computer readable recording medium. The computer readable recording medium is any data storage device that can store data which can be thereafter read by the computer system. The computer readable recording medium includes a read-only memory (ROM), a random-access memory (RAM), a CD-ROM, a floppy disk, a hard disk and an optical magnetic disk.

The present application contains subject matter related to Korean patent application No. 10-2004-0104470, filed in the Korean Intellectual Property Office on December 10, 2004, the entire contents of which is incorporated herein by reference.

While the present invention has been described with respect to certain preferred embodiments, it will be apparent to those skilled in the art that various changes and modifications may be made without departing from the scope of the invention as defined in the following claims.

## Claims

1. A multi-view video coding apparatus, the multi-view video having predetermined multi-view pictures, comprising:
a spatiotemporal GOP information generating unit for generating spatiotemporal group of picture (GOP) structure information which denotes referencing relation among the multi-view pictures by representing referencing relation among multi-views and temporal referencing relation; and
a multi-view coding unit for predictively coding the multi-view pictures according to the spatiotemporal GOP structure information,
wherein the referencing relation allows a picture in one view to refer to a past picture or a future picture in the same view or a current picture in other view.

2. The multi-view video coding apparatus as recited in claim 1, wherein the spatiotemporal GOP information generating unit includes:
a predictive relation defining unit for defining a predictive relation among multi-views and temporal predictive relation; and
a predictive relation expressing unit for generating the spatiotemporal GOP structure information by representing the referencing relation among multi-views and the temporal referencing relation based on the predictive relation among multi-views and the temporal predictive relation defined by the predictive relation defining unit.

3. The multi-view video coding apparatus as recited in claim 1 or 2, wherein the referencing relation among multi-views is expressed as a graph.

4. The multi-view video coding apparatus as recited in one of claims 1 to 3, wherein the multi-view coding unit includes:
a ulti-view reference picture providing unit for providing one or more reference pictures for predictive coding according to the spatiotemporal GOP structure information;
a predicting unit for predicting a picture to be currently coded using the one or more reference pictures provided from the multi-view reference picture providing unit;
a transform and quantization unit for transforming and quantizing the picture predicted by the predicting unit; and
an entropy coding unit for coding the picture transformed and quantized by the transform and quantization unit using an entropy coding method.

5. The multi-view video coding apparatus as recited in claim 4, wherein the multi-view reference picture providing unit further provides supplementary information including the spatiotemporal GOP structure information and the entropy coding unit further codes the supplementary information.

6. The multi-view video coding apparatus as recited in claim 4 or 5, wherein the predicting unit includes:
a disparity/motion estimating unit for performing a motion estimation when the provided reference picture is in the same view as a view in which a current coded picture is and performing a disparity estimation when the provided reference picture is in a different view than a view in which a current coded picture is; and
a disparity/motion correcting unit for performing a motion compensation when the provided reference picture is in the same view as a view in which the currently coded picture is, and performing a disparity compensation when the provided reference picture is in a different view than a view in which the currently coded picture is.

7. The multi-view video coding apparatus as recited in claim 6, wherein the multi-view reference picture providing unit includes:
a recovery picture storing unit for storing one or more recovered pictures of other time of current view;
a first adjacent viewpoint reference picture storing unit for storing one or more recovered pictures of adjacent view at a current time;
a second adjacent viewpoint reference picture storing unit for storing one or more recovered pictures of adjacent view at other time;
a viewpoint transforming unit for transforming the pictures of adjacent view stored in the first adjacent viewpoint reference picture storing unit and the second adjacent viewpoint reference picture storing unit to respective pictures of current view ; and
a reference picture selecting unit for selecting one or more reference pictures used in current coding from pictures of the recovery picture storing unit and the viewpoint transforming unit according to the spatiotemporal GOP structure information and providing the selected one or more reference pictures.

8. The multi-view video coding apparatus as recited in claim 6 or 7, wherein the viewpoint transforming unit transforms the pictures of adjacent view to respective pictures of current view by performing a color correction, and a global motion compensation on the pictures of adjacent view.

9. A multi-view video coding method, the multi-view video having predetermined multi-view pictures, comprising the steps of:
a) generating spatiotemporal group of picture (GOP) structure information which denotes referencing relation among the multi-view pictures by representing referencing relation among multi-views and temporal referencing relation; and
b) predictively coding the multi-view pictures according to the spatiotemporal GOP structure information,
wherein the referencing relation allows a picture in one view to refer to a past picture or a future picture in the same view or a current picture in other view.

10. The multi-view video coding method as recited in claim 9, further comprising the steps as executed by the additional features defined in one of claims 2 to 8.

11. A multi-view video decoding apparatus, the multi-view video having predetermined multi-view pictures, comprising:
a multi-viewpoint decoding unit for decoding picture signal stream having spatiotemporal group of picture (GOP) structure information which denotes a referencing relation among the multi-view pictures by representing referencing relation among multi-views and temporal referencing relation; and
a picture reproducing unit for recovering the multi-view pictures from the signal decoded by the multi-viewpoint decoding unit based on the spatiotemporal GOP structure information,
wherein the referencing relation allows a picture in one view to refer to a past picture or a future picture in the same view or a current picture in other view.

12. The apparatus as recited in claim 1 or 11, wherein the referencing relation further allows a picture in one view to refer to a past picture or a future picture in other view, or

13. The apparatus as recited in one of claims 1 to 5 or 11 to 12, wherein the spatiotemporal GOP structure information includes decoding order information among multi-views.

14. The multi-view video decoding apparatus as recited in one of claims 1 to 6 or claims 11 to 13, wherein the spatiotemporal GOP structure information includes MPEG-2 GOP structure information which is temporal GOP structure information, and referencing relation information among multi-views which is spatial GOP structure information.

15. A multi-view video decoding method, the multi-view video having predetermined multi-view pictures, comprising the steps of:
decoding picture signal stream having spatiotemporal group of picture (GOP) structure information which denotes a referencing relation among the multi-view pictures by representing referencing relation among multi-views and temporal referencing relation; and
recovering the multi-view pictures from the signal decoded by the decoding step based on the spatiotemporal GOP structure information,
wherein the referencing relation allows a picture in one view to refer to a past picture or a future picture in the same view or a current picture in other view.

16. The multi-view video decoding method as recited in claim 15, further comprising the features as defined in one of claims 12, 13, or 14.
